# EUROPÄISCHE PATENTANMELDUNG

(11) **EP 3 572 965 A1**
(43) Veröffentlichungstag der Anmeldung: **27.11.2019**
(21) Anmeldenummer: 18173595.2
(22) Anmeldetag: 22.05.2018
(51) Int. Cl.: G06F 21/64, G06Q 10/10, H04L 9/32

(54) **BETREIBEN EINES SOFTWAREDEFINIERTEN NETZWERKS DURCH SYNCHRONISIERUNG DES NETZABBILDS ÜBER EINE BLOCKCHAIN**

(71) Anmelder: Siemens Aktiengesellschaft, 80333 München (DE)
(72) Erfinder: Kulkarni, Vivek, 82008 Unterhaching (DE); Zeiger, Florian, 85635 Höhenkirchen-Siegertsbrunn (DE)

(57) **Zusammenfassung**

Vorgeschlagen wird eine Steuervorrichtung (1) zum Betreiben eines softwaredefinierten Netzwerks (2) mit einer Anzahl von Netzelementen (4). Die Steuervorrichtung (1) umfasst: eine Speichereinheit (5), die dazu eingerichtet ist, ein Netzabbild (6) des softwaredefinierten Netzwerks (2) zu speichern; eine Steuereinheit (7), die dazu eingerichtet ist, basierend auf dem gespeicherten Netzabbild (6) ein Weiterleiten von Datenströmen (8) durch die Anzahl von Netzelementen (4) zu steuern; und eine Abgleicheinheit (9), die dazu eingerichtet ist, das gespeicherte Netzabbild (6) mit einem in einem Hauptbuch (12) einer Blockchain (11) veröffentlichten Netzabbild (13) abzugleichen.

Vorteilhafterweise ist das Netzabbild in dem Hauptbuch der Blockchain vor Manipulationen geschützt. Somit ist auch das das gespeicherte Netzabbild vor Manipulationen geschützt. Über das in der Blockchain veröffentlichte Netzabbild ist ein einfacher Abgleich des Netzabbilds der Steuervorrichtung mit einem Netzabbild einer weiteren Steuervorrichtung möglich.

Außerdem werden ein System, ein Verfahren und ein Computerprogrammprodukt zum Betreiben eines softwaredefinierten Netzwerks vorgeschlagen.

## Beschreibung

Die vorliegende Erfindung betrifft eine Steuervorrichtung, ein System und ein Verfahren zum Betreiben eines softwaredefinierten Netzwerks.

Bekannt sind softwaredefinierte Netzwerke, die aus mehreren Netzelementen, wie etwa SDN-Switches, gebildet sind, welche von einer Steuervorrichtung, wie etwa einem SDN-Controller, gesteuert werden. Die SDN-Switches identifizieren Datenströme auf einer Datenebene des Netzwerks und leiten sie gemäß in den SDN-Switches implementierten Datenstromregeln weiter. Der SDN-Controller kommuniziert auf einer Steuerebene des Netzwerks mit den SDN-Switches, um basierend auf einem in dem SDN-Controller gespeicherten Netzabbild Datenstromregeln in den SDN-Switches zu implementieren. In dem softwaredefinierten Netzwerk können mehrere virtuelle Netzwerkbereiche oder Mandantennetzbereiche eingerichtet sein. Angedacht sind verteilte Netze oder Weitbereichsnetze (WAN) auf SDN-Basis, bei denen mehrere physikalische Teilbereiche von einem jeweiligen SDN-Controller gesteuert werden. Dafür ist ein Abgleich des Netzabbilds zwischen den SDN-Controllern erforderlich, um mehrere Teilbereiche überspannende Mandantennetzbereiche auszubilden.

Ein Angreifer, der Zugriff auf das Netzabbild erlangt, kann Datenströme in dem Netzwerk manipulieren. Herkömmlich wird das Netzabbild daher in einem privaten Bereich lokal geschützt. Dies steht im Widerspruch zu dem Wunsch, das Netzabbild mit weiteren Steuervorrichtungen eines WAN abzugleichen.

Vor diesem Hintergrund besteht eine Aufgabe der vorliegenden Erfindung darin, den einfachen und sicheren Abgleich eines Netzabbilds einer Steuervorrichtung eines softwaredefinierten Netzwerks zu ermöglichen.

Demgemäß wird eine Steuervorrichtung zum Betreiben eines softwaredefinierten Netzwerks mit einer Anzahl von Netzelementen vorgeschlagen. Die Steuervorrichtung weist auf: eine Speichereinheit, die dazu eingerichtet ist, ein Netzabbild des softwaredefinierten Netzwerks zu speichern; eine Steuereinheit, die dazu eingerichtet ist, basierend auf dem gespeicherten Netzabbild ein Weiterleiten von Datenströmen durch die Anzahl von Netzelementen zu steuern; und eine Abgleicheinheit, die dazu eingerichtet ist, das gespeicherte Netzabbild mit einem in einem Hauptbuch einer Blockchain veröffentlichten Netzabbild abzugleichen.

Vorteilhafterweise vergleicht die Steuereinrichtung das in der Steuervorrichtung gespeicherte Netzabbild mit einem veröffentlichten Netzabbild und kann es somit vor lokalen Manipulationen schützen. Das veröffentlichte Netzabbild ist in einer Blockchain veröffentlicht und kann somit durch ein Konsensprotokoll der Blockchain vor öffentlichen Manipulationen geschützt werden. Ein weiterer Vorteil kann darin bestehen, dass über das in der Blockchain veröffentlichte Netzabbild ein einfacher Abgleich des Netzabbilds der Steuervorrichtung mit einem Netzabbild einer weiteren Steuervorrichtung möglich ist.

Unter einem softwaredefinierten Netzwerk ist insbesondere ein virtualisierbares Netzwerk zu verstehen, in dem eine Anzahl virtueller Netzwerkbereiche einrichtbar ist. Ein virtueller Netzwerkbereich wird auch als Mandantennetzbereich bezeichnet. Ein jeweiliger Mandantennetzbereich kann gegen Beeinflussung durch einen weiteren Mandantennetzbereich geschützt sein. Das softwaredefinierte Netzwerk kann somit auch als mandantenfähiges Netzwerk bezeichnet werden.

Unter "softwaredefiniert" ist insbesondere zu verstehen, dass Funktionalität des aus den Netzelementen gebildeten Netzwerks nicht fest auf einem jeweiligen Netzelement vorgegeben ist. Insbesondere kann die Funktionalität eines jeweiligen Netzelements von der Steuervorrichtung dadurch gesteuert werden, dass die Steuereinheit der Steuervorrichtung basierend auf dem in der Speichereinheit gespeicherten Netzabbild eine jeweilige Anzahl von Datenstromregeln in einem jeweiligen der Netzelemente implementiert.

Insofern kann ein jeweiliges der Anzahl Netzelemente insbesondere als softwaredefinierbares Netzelement bezeichnet werden. Ein jeweiliges Netzelement weist insbesondere mehrere Anschlüsse auf und ist dazu eingerichtet, einen auf einem der Anschlüsse eingehenden Datenstrom gemäß den in dem Netzelement per Software implementierten Datenstromregeln zu behandeln. Das Behandeln kann beispielsweise ein Weiterleiten an einen weiteren der Anschlüsse umfassen. Das Weiterleiten kann insbesondere auch ein Parametrisieren umfassen. Unter Parametrisieren ist beispielsweise das Durchsetzen eines Verkehrsparameters wie etwa einer Bandbreitenlimitierung zu verstehen. Das Behandeln kann auch ein Verwerfen und/oder ein Ausführen einer virtuellen Netzwerkfunktion umfassen.

Eine "Anzahl" bezeichnet hier und im Folgenden eine Zahl von eins oder mehr.

Ein Datenstrom ist beispielsweise ein Datenstrom gemäß RFC 2722, RFC 3697 oder RFC 3917. Ein Datenstrom kann beispielsweise aufgefasst werden als Anzahl von Paketen, die unter Verwendung eines definierten Protokolls innerhalb eines definierten Zeitraums von einem Ausgangs-Endpunkt zu einem Ziel-Endpunkt transportiert werden. Ein Ausgangs-Endpunkt oder ein Ziel-Endpunkt des Datenstroms kann beispielsweise ein definierter Port oder Dienst eines Netzwerkendgeräts sein.

Beispielsweise kann ein jeweiliges Netzelement anhand von Verkehrseigenschaften, wie beispielsweise dem definierten Protokoll, dem Ausgangs- und/oder Ziel-Endpunkt usw., eines auf einer Datenebene des Netzwerks eingehenden Pakets eine zugehörige der in dem Netzelement implementierten Datenstromregeln identifizieren und das Paket als Teil eines Datenstroms gemäß der identifizierten der Datenstromregeln behandeln, wie beispielsweise weiterleiten und parametrisieren. Wenn keine zu dem eingehenden Paket zugehörige Datenstromregel identifiziert wird, kann das Netzelement die Verkehrseigenschaften des eingehenden Pakets über eine Steuerebene des softwaredefinierten Netzwerks an die Steuervorrichtung übermitteln. Die Steuervorrichtung kann dazu eingerichtet sein, in Reaktion auf von einem Netzelement übermittelte Verkehrseigenschaften basierend auf dem in der Speichereinheit gespeicherten Netzabbild eine zugehörige Datenstromregel berechnen und einen neuen Datenstrom dadurch einzurichten, dass sie die berechnete Datenstromregel in einer Anzahl von Netzelementen des Netzwerks implementiert, entlang derer der Datenstrom zu leiten ist. Auf diese Weise kann die Steuereinheit der Steuervorrichtung das Weiterleiten von Datenströmen durch die Anzahl von Netzelementen steuern.

Ein jeweiliges Netzabbild kann insbesondere Informationen über die physikalische Konfiguration des softwaredefinierten Netzwerks umfassen. Beispiele für Informationen über die physikalische Konfiguration sind eine physikalische Topologie, welche Netzwerkendgeräte, Netzelemente und Verbindungsstrecken dazwischen umfassen und deren jeweilige Eigenschaften definieren kann. Ferner kann das Netzabbild Informationen über eine virtuelle Konfiguration einer Anzahl von virtuellen Mandantennetzbereichen umfassen, wie etwa eine virtuelle Topologie eines jeweiligen Mandantennetzbereichs, sowie Definitionen von Endpunkten, Diensten, Verkehrsparametern wie zugesicherte Bandbreiten, Bandbreitenbeschränkungen etc.

Somit kann in dem softwaredefinierten Netzwerk Funktionalität zum Behandeln und/oder Weiterleiten von Datenströmen durch die Netzelemente implementiert sein. Diese Funktionalität wird auch als Datenebene bezeichnet. Funktionalität zum Steuern des Behandelns und/oder Weiterleitens der Datenströme, zum Festlegen von Mandantennetzbereichen und dergleichen kann durch die Steuervorrichtung implementiert sein. Diese Funktionalität wird im Weiteren auch als "Steuerebene" bezeichnet. Dank einer klaren Trennung von Datenebene und Steuerebene kann das softwaredefinierte Netzwerk zentral gesteuert und schnell an sich ändernde Gegebenheiten angepasst werden.

Vorzugsweise kann ein jeweiliges Netzelement ein SDN-Netzelement, ein SDN-Router und/oder ein SDN-Switch sein, und die Steuervorrichtung kann ein SDN-Controller sein.

Eine Blockchain kann als verteilte, öffentliche, transaktionale, manipulationsgeschützte, konsensbasierte Datenbank aufgefasst werden. Unter "verteilt" ist insbesondere zu verstehen, dass die Blockchain durch eine Mehrzahl von disjunkten Blockchain-Knoten ausgebildet ist. Unter "öffentlich" ist insbesondere zu verstehen, dass sich die Blockchain-Knoten unter der Kontrolle unterschiedlicher Akteure, wie etwa unterschiedlichen Mandanten des Netzwerks oder unterschiedlicher Betreiber unterschiedlicher Netzwerke bzw. physikalischer Netzwerkbereiche, befinden können. Unter "transaktional" ist insbesondere zu verstehen, dass Daten in der Blockchain als Abfolge von Transaktionen speicherbar sind. Die Abfolge aller in der Blockchain gespeicherten Transkationen kann als "Hauptbuch" der Blockchain bezeichnet werden. Unter "manipulationsgeschützt" ist insbesondere zu verstehen, dass nachträgliche Veränderungen an dem Hauptbuch der Blockchain nicht möglich sind oder nur im Falle eines Konsenses zwischen einer Mehrzahl der Blockchain-Knoten möglich sind. Unter "konsensbasiert" ist zu verstehen, dass die Aufnahme einer weiteren Transaktion in das Hauptbuch einen Konsens zwischen einer Mehrzahl der Blockchain-Knoten erfordert.

Insbesondere kann eine Blockchain wie folgt ausgestaltet sein: Das Hauptbuch der Blockchain umfasst eine Kette von aufeinanderfolgenden Blöcken. Ein jeweiliger Block umfasst mindestens eine der in dem Hauptbuch gespeicherten Transaktionen, die auch als "bestätigte Transkationen" bezeichnet werden. Ein jeweiliger Block umfasst einen Hashwert aller bestätigten Transaktionen des Blocks. Bei dem Hashwert aller bestätigten Transkationen kann es sich beispielsweise um einen Hashwert eines Merkle-Baums aus Hashwerten einer jeweiligen Transaktion des Blocks handeln. Ein jeweiliger Block umfasst ferner einen Referenzwert, der beispielsweise ein Hashwert des vorangehenden Blocks der Kette ist. Auf diese Weise kann das Hauptbuch als eine auf Hashwerten basierende Kette von Blöcken ausgebildet sein. Eine Manipulation an einer Transaktion des Hauptbuchs kann zur Invalidierung der Hashwerte des die manipulierte Transaktion umfassenden Blocks und damit auch zur Invalidierung aller Hashwerte aller nachfolgenden Blöcke führen.

Insbesondere speichert ein jeweiliger Blockchain-Knoten eine oder mehrere lokale Kopien des Hauptbuchs. Eine längste der lokalen Kopien des Hauptbuchs kann von dem Blockchain-Knoten als gültige Kopie des Hauptbuchs, mithin also als das Hauptbuch, behandelt werden.

Insbesondere kann eine Blockchain ferner wie folgt ausgestaltet sein: Die Blockchain-Knoten tauschen eine unbestätigte Transaktion, die dem Hauptbuch hinzugefügt werden soll, untereinander aus. Der Austausch kann auf Peer-to-Peer-Weise erfolgen, wobei ein jeweiliger Blockchain-Knoten mit mindestens einem weiteren, jedoch nicht notwendigerweise mit allen der Blockchain-Knoten verbunden ist. Ein jeweiliger Blockchain-Knoten kann aus den ausgetauschten Transkationen, die ihn erreichen, einen unbestätigten Block bilden, der eine gleiche Struktur wie ein bestätigter Block aufweisen kann. Die Blockchain-Knoten tauschen unbestätigte Blöcke untereinander auf gleiche Weise wie die unbestätigten Transaktionen aus. Ein jeweiliger Blockchain-Knoten nimmt einen der ausgetauschten unbestätigten Blockchain-Knoten, der ihn erreicht, nur dann in die eine oder in eine der mehreren lokalen Kopien des Hauptbuchs auf, wenn der unbestätigte Block und eine jeweilige der unbestätigten Transaktionen des Blocks einem Konsensprotokoll der Blockchain entsprechen.

Das Konsensprotokoll der Blockchain kann mindestens vorschreiben, dass der Referenzwert des unbestätigten Blocks der Hashwert des letzten Blocks der lokalen Kopie des Hauptbuchs ist. Auf diese Weise kann sichergestellt werden, dass unbestätigte Blöcke nur dann in das Hauptbuch aufgenommen werden, wenn ihr Urheber ein Blockchain-Knoten ist, der über Kenntnis des gesamten, nicht manipulierten Hauptbuchs verfügt. Das Konsensprotokoll kann ferner vorschreiben, dass die Abfolge von Transaktionen des unbestätigten Blocks gültige Zustandsübergänge eines von dem Hauptbuch beschriebenen Zustands darstellen. Weitere Kriterien, die das Konsensprotokoll vorschreiben kann, wie etwa ein Proof-of-Stake, werden nachstehend näher beschrieben.

Insbesondere kann ein Konsens zwischen den Blockchain-Knoten dadurch entstehen, dass eine Mehrzahl der Blockchain-Knoten den unbestätigten Block als bestätigten Block in das Hauptbuch übernimmt.

Ein böswilliger Blockchain-Knoten, der gemäß einem modifizierten Konsensprotokoll und/oder mit einem modifizierten Hauptbuch arbeitet, kann die Fähigkeit verlieren, an der Konsensfindung teilzuhaben oder den Zustand des Hautbuchs zu verändern, da von ihm übermittelte Blöcke von den übrigen Blockchain-Knoten verworfen werden können.

Somit unterliegt vorteilhafterweise eine jegliche Veränderung des Zustands des Hauptbuchs oder der in dem Hauptbuch gespeicherten Daten einer Kontrolle durch eine Mehrzahl von Blockchain-Knoten. Auf diese Weise kann vorteilhaft durch automatisierte Konsensfindung ein hoher Grad an Manipulationsschutz des Hauptbuchs gewährleistet werden.

Das in dem Hauptbuch der Blockchain veröffentlichte Netzabbild kann als Payload einer oder mehrerer Transaktionen in dem Hauptbuch der Blockchain gespeichert sein. Insofern lässt sich das veröffentlichte Netzabbild auch als eine Abfolge von in dem Hauptbuch veröffentlichten Änderungstransaktionen oder Änderungen auffassen, die, nacheinander ausgeführt, einen aktuellen Zustand des veröffentlichten Netzabbilds ergeben.

Unter Abgleichen des in der Speichereinheit der Steuervorrichtung gespeicherten Netzabbilds mit dem in dem Hauptbuch der Blockchain veröffentlichten Netzabbilds ist insbesondere zu verstehen, dass Änderungen an einem der Netzabbilder in das jeweilige andere Netzabbild übernommen werden, so dass das gespeicherte Netzabbild und das veröffentlichte Netzabbild synchron gehalten werden.

Das Hauptbuch der Blockchain kann für die Abgleicheinheit der Steuervorrichtung beispielsweise dadurch zugänglich sein, dass die Abgleicheinheit einen der Blockchain-Knoten umfasst, und/oder dadurch, dass die Abgleicheinheit mit mindestens einem der Blockchain-Knoten kommunikativ verbunden ist.

Die Blockchain kann eine private Blockchain eines Betreibers der Steuervorrichtung, eine Blockchain eines Konsortiums aus mehreren Betreibern mehrerer Steuervorrichtungen oder eine öffentliche Blockchain sein. Insbesondere kann der Austausch von Transaktionen und Blöcken durch die Blockchain-Knoten in der Datenebene des softwaredefinierten Netzwerks erfolgen. Somit kann das Hauptbuch der Blockchain in der Datenebene des softwaredefinierten Netzwerks gespeichert sein. Somit kann vorteilhaft der Abgleich des veröffentlichten Netzabbilds beispielsweise mit weiteren Steuervorrichtungen vereinfacht werden. Gleichzeitig kann vorteilhaft durch das Konsensprotokoll der Blockchain das veröffentlichte Netzabbild vor Manipulationen geschützt werden.

Gemäß einer weiteren Ausführungsform ist die Abgleicheinheit dazu eingerichtet, eine Änderung des gespeicherten Netzabbilds als Änderungsanforderung des veröffentlichten Netzabbilds an die Blockchain zu übermitteln; die Änderung des gespeicherten Netzabbilds zu übernehmen, wenn die Änderungsanforderung des veröffentlichten Netzabbilds als Änderung des veröffentlichen Netzabbilds in dem Hauptbuch der Blockchain veröffentlicht wird; und die Änderung des gespeicherten Netzabbilds zu verwerfen, wenn die Änderungsanforderung des veröffentlichten Netzabbilds nicht als Änderung des veröffentlichen Netzabbilds in dem Hauptbuch der Blockchain veröffentlicht wird.

Demgemäß kann das in der Steuervorrichtung gespeicherte Netzabbild vorteilhafterweise gegen lokale Manipulationen geschützt werden. Insbesondere kann das in der Steuervorrichtung gespeicherte Netzabbild nur dann erfolgreich geändert werden, wenn ein Konsens zwischen den Blockchain-Knoten der Blockchain erzielt wird. Somit kann man sagen, dass Änderungen an dem Netzabbild der Steuervorrichtung einem Peer-Review durch mehrere Akteure, wie beispielsweise Mandanten des softwaredefinierten Netzwerks oder Betreiber weiterer Steuervorrichtungen, unterliegen.

Eine "Änderung" eines jeweiligen Netzabbilds kann als eine Transaktion aufgefasst werden, die das Netzabbild vor der Änderung in das Netzabbild nach der Änderung überführt, und/oder als Daten, die eingerichtet sind, bei Anwendung auf das Netzabbild das Netzabbild zu ändern.

Eine "Änderungsanforderung" kann als noch nicht bestätigte Änderung" und insofern als unbestätigte Transaktion (unbestätigte Änderungstransaktion) aufgefasst werden.

Das "Übermitteln der Änderung des gespeicherten Netzabbilds als Änderungsanforderung des veröffentlichten Netzabbilds an die Blockchain" kann insbesondere erfolgen, indem ein von der Abgleicheinheit der Steuervorrichtung umfasster oder mit der Abgleicheinheit der Steuervorrichtung kommunikativ gekoppelter Blockchain-Knoten der Blockchain einen unbestätigten Block mit der Änderungsanforderung als unbestätigter Transaktion bildet und den unbestätigten Block an mindestens einen weiteren Blockchain-Knoten der Blockchain übermittelt.

Unter "Veröffentlichen der Änderungsanforderung in dem Hauptbuch der Blockchain als Änderung des veröffentlichten Netzabbilds" ist insbesondere zu verstehen, dass ein Konsens zwischen mehreren der Blockchain-Knoten erzielt wird und die Änderungstransaktion von einem jeweiligen Blockchain-Knoten als bestätigte Transaktion in das Hauptbuch übernommen wird.

Unter "Übernehmen der Änderung des gespeicherten Netzabbilds" ist insbesondere zu verstehen, dass die Änderung auf das gespeicherte Netzabbild angewendet wird und die Steuereinheit der Steuervorrichtung ab diesem Zeitpunkt das Weiterleiten von Datenströmen in dem softwaredefinierten Netzwerk durch die Anzahl von Netzelementen basierend auf dem geänderten gespeicherten Netzabbild steuert.

Die Steuervorrichtung (Steuereinheit, Speichereinheit und/oder Abgleicheinheit) kann die Blockchain (einen von der Abgleicheinheit umfassten oder kommunikativ mit der Abgleicheinheit verbundenen Blockchain-Knoten) in regelmäßigen Abständen abfragen, um festzustellen, ob eine an jeweilige an die Blockchain übermittelte Änderungsanforderung des veröffentlichten Netzabbilds veröffentlicht wurde, oder sie kann bei Veröffentlichen der Änderungsanforderung von dem Blockchain-Knoten notifiziert werden.

Unter "Verwerfen der Änderung des gespeicherten Netzabbilds" ist insbesondere zu verstehen, dass die Änderung nicht auf das in der Speichereinheit gespeicherte Netzabbild angewendet wird und/oder die Änderung, falls sie bereits auf das in der Speichereinheit gespeicherte Netzabbild angewendet wurde, rückgängig gemacht wird, und die Steuereinheit der Steuervorrichtung fortfährt, das Weiterleiten von Datenströmen in dem softwaredefinierten Netzwerk durch die Anzahl von Netzelementen basierend auf dem ungeänderten, in der Speichereinheit gespeicherten Netzabbild zu steuern.

Gemäß einer weiteren Ausführungsform ist die Abgleicheinheit dazu eingerichtet, wenn eine Änderungsanforderung des veröffentlichten Netzabbilds als Änderung des veröffentlichen Netzabbilds in dem Hauptbuch der Blockchain veröffentlicht wird, die Änderung des veröffentlichten Netzabbilds als Änderung des gespeicherten Netzabbilds zu übernehmen.

Demgemäß ist vorteilhafterweise ein Abgleich des in der Speichereinheit gespeicherten Netzabbilds mit einer weiteren Steuervorrichtung möglich. Wird beispielsweise das Netzabbild der weiteren Steuervorrichtung geändert und eine zugehörige Änderungsanforderung des veröffentlichten Netzabbilds in dem Hauptbuch der Blockchain veröffentlicht, so wird das in der Speichereinheit gespeicherte Netzabbild ebenfalls entsprechend geändert. Auch kann vorteilhafterweise eine Steuervorrichtung beispielsweise an einem entfernten Standort bereitgestellt werden und von einem Betreiber des softwaredefinierten Netzwerks durch Veröffentlichen von Änderungsanforderungen in dem Hauptbuch der Blockchain fernkonfigurierbar sein.

Somit kann eine einfache Möglichkeit zum Abgleich oder zum Ändern des in der Speichereinheit gespeicherten Netzabbilds geschaffen werden. Obwohl für den Abgleich Datenübertragungen auf einer Datenebene des softwaredefinierten Netzwerks und/oder in einem öffentlichen Netzwerk benutzt werden können, kann das Konsensprotokoll der Blockchain gewährleisten, dass nur legitime Änderungsanforderungen in dem Hauptbuch der Blockchain veröffentlicht werden. Mithin kann das in der Speichereinheit der Steuervorrichtung gespeicherte Netzabbild durch das Konsensprotokoll der Blockchain vor Manipulationen durch böswillige Dritte geschützt werden.

Gemäß einer weiteren Ausführungsform umfasst die Abgleicheinheit einen Blockchain-Knoten der Blockchain. Der Blockchain-Knoten ist dazu eingerichtet, einem Konsens zur Veröffentlichung einer an die Blockchain übermittelten Änderungsanforderung des veröffentlichen Netzabbilds in dem Hauptbuch der Blockchain zuzustimmen, wenn die Änderungsanforderung des veröffentlichten Netzabbilds einem Konsensprotokoll der Blockchain entspricht.

Demgemäß kann vorteilhafterweise die Notwendigkeit einer speziell gesicherten Kommunikation zwischen der Steuervorrichtung und einem zu der Steuervorrichtung externen Blockchain-Knoten eliminiert werden. Die Abgleich-Einheit der Steuervorrichtung kann direkt an der Blockchain partizipieren. Weiterhin kann vorteilhafterweise die Steuervorrichtung an der Konsensfindung der Blockchain-Knoten der Blockchain über das Veröffentlichen von Änderungsanforderungen an dem veröffentlichten Netzabbild beteiligt werden.

Gemäß einer weiteren Ausführungsform ist die Steuereinheit dazu eingerichtet, von mindestens einem der Anzahl von Netzelementen Dienstgüteinformationen zu empfangen, wobei das Konsensprotokoll der Blockchain auf den Dienstgüteinformationen basiert.

Unter Dienstgüteinformationen sind insbesondere Informationen zu verstehen, die eine Güte eines Betriebs einer mit einem jeweiligen Netzelement verbundenen Entität oder eines davon bereitgestellten Netzwerkdienstes beschreiben. Bei der Entität kann es sich beispielsweise um ein Netzwerkendgerät, um ein weiteres Netzelement und/oder um eine weitere Steuervorrichtung handeln. Bei den Dienstgüteinformationen kann es sich beispielsweise um Informationen über Verfügbarkeit (Uptime/Downtime), Verkehrsvolumen, Paketverlusthäufigkeiten, mittlere Bandbreite, Antwortgeschwindigkeit und dergleichen der Entität oder des Netzwerkdienstes und/oder um einen aus derartigen Informationen abgeleiteten Dienstgüteparameter handeln.

Anders ausgedrückt kann die Steuervorrichtung von den Netzelementen Informationen über den Netzwerkbetrieb erhalten, der durch die Netzelemente realisiert wird. Anhand dieser Informationen kann die Steuervorrichtung die Qualität des Netzwerkbetriebs des softwaredefinierten Netzwerks, einzelner Mandantennetzbereiche und/oder Endpunkte davon und/oder die Qualität des Betriebs eines benachbarten softwaredefinierten Netzwerks beurteilen.

Dass das "Konsensprotokoll der Blockchain auf den Dienstgüteinformationen basiert", kann insbesondere bedeuten, dass eine Änderung des veröffentlichten Netzabbilds nur möglich ist, wenn eine dienstgütebasierte Bedingung erfüllt ist. Insbesondere kann ein Konsens über das Veröffentlichen einer Änderung des veröffentlichen Netzabbilds nur dann erreicht werden, wenn die dienstgütebasierte Bedingung erfüllt ist.

Beispielsweise kann der Blockchain-Knoten der Abgleicheinheit der Steuervorrichtung dem Konsens nur dann zustimmen, wenn aus den von der Steuereinheit empfangenen Dienstgüteinformationen hervorgeht, dass die Änderungsanforderung von einem weiteren Blockchain-Knoten ausgeht, der Teil einer Entität (Netzwerkendgerät, weiteres Netzelement, weitere Steuervorrichtung) ist, die eine hinreichende Dienstgüte erbringt und/oder in einem Mandantennetzbereich des softwarebasierten Netzwerks, welcher eine hinreichende Dienstgüte erbringt, und/oder in einem weiteren softwaredefinierten Netzwerk angeordnet ist, welches dem von der Steuervorrichtung gesteuerten softwaredefinierten Netzwerk gegenüber eine hinreichende Dienstgüte erbringt.

Unter "eine hinreichende Dienstgüte" ist insbesondere zu verstehen, dass ein aus den Dienstgüteinformationen abgeleiteter Dienstgüteparameter größer als ein vorbestimmter Schwellwert ist. Der Dienstgüteparameter kann die aktuelle Dienstgüte und/oder einen Mittelwert einer über einen vorbestimmten Zeitraum hinweg erfassten Dienstgüte beschreiben.

Dadurch, dass die Konsensfindung von einer erbrachten Dienstgüte abhängen kann, kann vorteilhafterweise ein Proof-of-Stake implementiert werden. Der "Proof-of-Stake" kann darin bestehen, dass Änderungen an dem veröffentlichten Netzabbild nur von Blockchain-Knoten erfolgreich angefordert werden können, die sich im Verantwortungsbereich eines Akteurs, wie etwa eines Betreibers eines weiteren softwaredefinierten Netzwerks oder eines Mandanten des softwaredefinierten Netzwerks, befinden, der sich dadurch Kredibilität erworben hat, dass ein Netzelement, eine Steuervorrichtung, ein Mandantennetzbereich oder ein weiteres softwaredefiniertes Netzwerk unter seinem Verantwortungsbereich für das softwaredefinierte Netzwerk Dienste von hinreichende Güte erbringt bzw. erbracht hat.

Gemäß einer weiteren Ausführungsform ist mindestens die Steuereinheit in einem privaten Bereich angeordnet, und mindestens der Blockchain-Knoten ist in einem öffentlichen Bereich angeordnet.

Vorzugsweise ist auch die Speichereinheit in dem privaten Bereich angeordnet.

Der private Bereich ist insbesondere ein physikalischer oder virtueller Netzwerkbereich, der beispielsweise geschützt ist gegen Netzwerkzugriffe durch Endpunkte in den Mandantennetzbereichen des softwaredefinierten Netzwerks und/oder durch Endpunkte in weiteren softwaredefinierten Netzwerken und/oder durch Blockchain-Knoten der Blockchain und/oder durch unbeteiligte Dritte.

Der öffentliche Bereich ist insbesondere ein physikalischer oder virtueller Netzwerkbereich, der mindestens für einen weiteren Blockchain-Knoten der Blockchain zugänglich ist.

Demgemäß ist Funktionalität zum Abgleichen des gespeicherten Netzwerkabbildes mit dem veröffentlichten Netzabbild für Netzwerkzugriffe durch eine externe Entität, wie den weiteren Blockchain-Knoten, exponiert. Gleichzeitig ist vorteilhafterweise Funktionalität der Steuervorrichtung zum Steuern des softwaredefinierten Netzwerks und/oder das gespeicherte Netzabbild vor Manipulationen durch externe Netzwerkzugriffe geschützt.

Gemäß einem weiteren Aspekt wird ein System zum Betreiben eines softwaredefinierten Netzwerks mit einer Anzahl von Netzelementen vorgeschlagen. Das System weist auf: eine Anzahl von Steuervorrichtungen wie vorstehend beschrieben, mehrere Blockchain-Knoten, die gemeinsam die Blockchain ausbilden und dazu eingerichtet sind, eine an die Blockchain übermittelte Änderungsanforderung des veröffentlichen Netzabbilds untereinander auszutauschen; und die Änderungsanforderung nur dann als Änderung des veröffentlichten Netzabbilds in dem Hauptbuch der Blockchain zu veröffentlichen, wenn ein Konsens gemäß einem Konsensprotokoll der Blockchain zwischen den mehreren Blockchain-Knoten erreicht wird.

Eine jeweilige der Steuervorrichtungen kann dazu eingerichtet sein, eine jeweilige disjunkte Auswahl aus der Anzahl von Netzelementen zu steuern.

Die für die vorgeschlagene Steuervorrichtung beschriebenen Ausführungsformen und Merkmale gelten für das vorgeschlagene System entsprechend.

Gemäß einer weiteren Ausführungsform sind die Steuereinheiten der Anzahl von Steuervorrichtungen dazu eingerichtet, das Weiterleiten von Datenströmen durch die Anzahl von Netzelementen zu steuern, indem sie auf einer Steuerebene des softwaredefinierten Netzwerks mit der Anzahl von Netzelementen kommunizieren. Die mehreren Blockchain-Knoten, die gemeinsam die Blockchain ausbilden, sind dazu eingerichtet, auf einer Datenebene des softwaredefinierten Netzwerks und/oder über ein öffentliches Netzwerk miteinander zu kommunizieren.

Die Steuerebene des softwaredefinierten Netzwerks kann für die Kommunikation der Anzahl von Steuervorrichtungen mit der Anzahl von Netzelementen reserviert sein. Somit kann die Kommunikation zur Steuerung des Netzwerksbetriebs vorteilhaft gegen externe Beeinflussung und Manipulation geschützt sein.

Demgegenüber kann die Datenebene des softwaredefinierten Netzwerks für Datenflüsse des softwaredefinierten Netzwerks wie auch für die Kommunikation zwischen den Blockchain-Knoten gemeinsam genutzt werden.

Anders ausgedrückt kann die Blockchain in der Datenebene des softwaredefinierten Netzwerks und/oder in einem öffentlichen Netzwerk ausgebildet sein. Dadurch kann vorteilhafterweise ein Abgleich des Netzwerkwerkabbilds zwischen der Anzahl von Steuervorrichtungen ermöglicht werden, wobei die Blockchain für Manipulationssicherheit sorgt.

Unter einem öffentlichen Netzwerk ist insbesondere ein Netzwerk zu verstehen, das von dem softwaredefinierten Netzwerk verschieden ist. "Öffentlich" kann beispielsweise bedeuten, dass das öffentliche Netzwerk für Datenübertragungen mehr als eines Akteurs, beispielsweise eines Betreibers oder Mandanten, zugänglich ist.

Gemäß einer weiteren Ausführungsform sind die mehreren Blockchain-Knoten dazu eingerichtet, den Konsens zum Veröffentlichen der Änderung in dem Hauptbuch der Blockchain abhängig von einem Nachweis eines berechtigten Interesses eines die Änderung anfordernden Blockchain-Knotens zu erreichen.

Somit können Änderungen an dem veröffentlichten Netzabbild durch unberechtigte Akteure vorteilhaft verhindert werden.

Der Nachweis des berechtigten Interesses kann beispielsweise einen Identitätsnachweis und/oder einen Proof-of-Work und/oder einen Proof-of-Stake umfassen.

Unter dem "die Änderung anfordernden Blockchain-Knoten" ist insbesondere derjenige der Blockchain-Knoten zu verstehen, der die Änderungsanforderung des veröffentlichten Netzabbilds erstellt hat. Der anfordernde Blockchain-Knoten kann beispielsweise anhand einer digitalen Signatur identifiziert werden, die in der Änderungsanforderung umfasst ist.

Das "berechtigte Interesse" kann sich auf den Blockchain-Knoten selbst beziehen und/oder auf eine Entität, wie ein Netzwerkendgerät, eines der Netzelemente und/oder eine der Steuervorrichtungen, die den anfordernden Blockchain-Knoten umfassen, und/oder auf einen Betreiber einer solchen Entität.

Gemäß einer weiteren Ausführungsform sind in dem Hauptbuch der Blockchain Berechtigungsinformationen veröffentlicht, die diejenigen der Blockchain-Knoten angeben, die zum Anfordern von Änderungen des veröffentlichen Netzabbilds berechtigt sind. Der Nachweis des berechtigten Interesses umfasst einen Nachweis, dass der die Änderung anfordernde Blockchain-Knoten gemäß den in dem Hauptbuch der Blockchain veröffentlichten Berechtigungsinformationen zum Anfordern von Änderungen des veröffentlichten Netzabbilds berechtigt ist.

Somit kann vorteilhafterweise der Manipulationsschutz des veröffentlichten Netzabbilds und der gespeicherten Netzabbilder weiterhin dadurch erhöht werden, dass nur solche Blockchain-Knoten das veröffentlichte Netzabbild verändern können, denen zuvor eine explizite Berechtigung erteilt wurde.

Die Berechtigungsinformationen können auf analoge Weise wie das veröffentlichte Netzabbild als Payload von Transaktionen in dem Hauptbuch der Blockchain veröffentlicht sein.

Beispielsweise können die Berechtigungsinformationen einen öffentlichen digitalen Schlüssel der zur Anforderung berechtigten Blockchain-Knoten und/oder ein Zertifikat einer Zertifizierungsstelle (CA - Certificate Authority) umfassen. Der Nachweis des berechtigten Interesses kann eine digitale Signatur des anfordernden Blockchain-Knotens umfassen, die anhand des öffentlichen digitalen Schlüssels und/oder des Zertifikats verifizierbar ist.

Gemäß einer weiteren Ausführungsform sind mehrere virtuelle Mandantennetzbereiche in dem softwaredefinierten Netzwerk eingerichtet, welche durch das veröffentlichte Netzabbild definiert sind. Ein jeweiliger einer Anzahl der mehreren Blockchain-Knoten ist jeweils einem der virtuellen Mandantennetzbereiche zugeordnet.

Unter einem Blockchain-Knoten, der "einem der virtuellen Mandantennetzbereiche zugeordnet" ist, ist insbesondere zu verstehen, dass der Blockchain-Knoten einen Endpunkt in dem virtuellen Mandantennetzbereich ausbildet, und/oder, dass der Blockchain-Knoten nachweislich von dem Mandanten betrieben wird, dem der virtuelle Mandantennetzbereich zugewiesen ist.

Somit können vorteilhafterweise Mandanten des virtuellen Mandantennetzbereichs, welche ein berechtigtes Interesse an einem reibungslosen Betrieb des softwaredefinierten Netzwerks haben, an dem Konsensprotokoll der Blockchain partizipieren. Man kann sagen, dass die Mandanten im gemeinsamen Konsens über das veröffentlichte Netzabbild und damit über die Konfiguration des softwaredefinierten Netzwerks entscheiden. Unter "entscheiden" ist hierbei insbesondere eine automatisierte Entscheidung zu verstehen, die von den Blockchain-Knoten basierend auf dem Konsensprotokoll getroffen wird.

Gemäß einer weiteren Ausführungsform ist eine jeweilige der Steuervorrichtungen dazu eingerichtet, einen physikalischen Teilbereich des softwaredefinierten Netzwerks zu steuern. Ein jeweiliger physikalischer Teilbereich ist durch eine disjunkte Auswahl aus der Anzahl von Netzelementen gebildet. Ein jeweiliger einer Anzahl der mehreren Blockchain-Knoten ist jeweils einem der physikalische Teilbereiche zugeordnet.

Insbesondere kann eine jeweilige der Steuervorrichtungen von einem jeweils unterschiedlichen Betreiber betrieben werden.

Insofern kann das softwaredefinierte Netzwerk auch aus Verbund aus mehreren softwaredefinierten Netzwerken und ein jeweiliger physikalischer Teilbereich auch als ein jeweiliges softwaredefiniertes Netzwerk aufgefasst werden.

Unter einem Blockchain-Knoten, der "einem der physikalischen Teilbereiche zugeordnet" ist, ist insbesondere zu verstehen, dass der Blockchain-Knoten einen Endpunkt in dem physikalischen Teilbereichs ausbildet, und/oder, dass der Blockchain-Knoten von dem Betreiber der den physikalischen Teilbereich steuernden Steuervorrichtung betrieben wird.

Vorzugsweise kann ein jeweiliger einem physikalischen Teilbereich zugeordneter Blockchain-Knoten als Teil derjenigen Steuervorrichtung ausgebildet sein, welche den jeweiligen physikalischen Teilbereich steuert.

Somit können vorteilhafterweise die Betreiber der Steuervorrichtungen, welche ihre Netzabbilder über die Blockchain abgleichen, an dem Konsensprotokoll der Blockchain partizipieren. Man kann sagen, dass die Betreiber im gemeinsamen Konsens über das veröffentlichte Netzabbild und damit über die Konfiguration des softwaredefinierten Netzwerks entscheiden. Unter "entscheiden" ist hierbei insbesondere eine automatisierte Entscheidung versehen, die von den Blockchain-Knoten basierend auf dem Konsensprotokoll getroffen wird.

Gemäß einer weiteren Ausführungsform umfasst der Nachweis eines berechtigten Interesses: einen Nachweis, dass der anfordernde Blockchain-Knoten einem der virtuellen Mandantennetzbereiche und/oder einem der physikalischen Teilbereiche zugeordnet ist, und einen Nachweis einer Dienstgüte des virtuellen Mandantennetzbereichs und/oder des physikalischen Teilbereichs, dem der anfordernde Blockchain-Knoten zugeordnet ist.

Somit können Änderungen des veröffentlichten Netzabbilds nur von Blockchain-Knoten erfolgreich angefordert werden, die sich dadurch, dass der ihnen zugeordnete virtuelle Mandantennetzbereich und/oder physikalische Teilbereich Dienste einer hinreichenden Güte erbringt, Kredibilität erworben haben.

Der Nachweis, dass der anfordernde Blockchain-Knoten einem der virtuellen Mandantennetzbereiche und/oder einem der physikalischen Teilbereiche zugeordnet ist, kann beispielsweise mittels einer digitalen Signatur erfolgen.

Denkbar ist auch, dass eine Zugehörigkeit des anfordernden Blockchain-Knotens zu einem Mandantennetzbereich und/oder einem physikalischen Netzbereich anhand eines Datenstroms bestimmt wird, mit welchem der anfordernde Blockchain-Knoten die Änderungsanforderung übermittelt.

Der Nachweis einer Dienstgüte kann insbesondere erfolgen, indem ein jeweiliger am Konsens beteiligter Blockchain-Knoten von einer jeweiligen Steuervorrichtung eine Bestätigung anfragt, ob der virtuelle Mandantennetzbereich und/oder der physikalische Teilbereich, dem der anfordernde Blockchain-Knoten zugewiesen ist, eine Dienstgüte erbringt, die höher als ein vorbestimmter Schwellwert ist.

Gemäß einer weiteren Ausführungsform ist die Steuereinheit einer jeweiligen der mehreren Steuervorrichtungen dazu eingerichtet, von mindestens einem der disjunkten Auswahl von Netzelementen des von der Steuervorrichtung gesteuerten physikalischen Teilbereiches Dienstgüteinformationen bezüglich der Dienstgüte einer Anzahl weiterer der physikalischen Teilbereiche zu empfangen. Die Speichereinheit einer jeweiligen der mehreren Steuervorrichtungen ist dazu eingerichtet, für jeden der Anzahl weiterer physikalischer Teilbereiche einen zeitlichen Verlauf der von der Steuereinheit empfangenen Dienstgüteinformationen zu speichern. Der Nachweis der Dienstgüte des physikalischen Teilbereichs, dem der anfordernde Blockchain-Knoten zugeordnet ist, basiert auf dem in der Speichereinheit einer jeweiligen der mehreren Steuervorrichtungen gespeicherten zeitlichen Verlauf der Dienstgüteinformationen bezüglich des physikalischen Teilbereichs.

Das mindestens eine der Netzelemente, des von einer jeweiligen der Steuervorrichtungen gesteuerten physikalischen Teilbereiche, kann insbesondere ein Netzelement sein, das einen Übergabepunkt zu einem Netzelement eines benachbarten physikalischen Teilbereichs ausbildet. Somit kann das mindestens eine der Netzelemente über Dienstgüteinformationen über eine Güte von Diensten und/oder des Betriebs des benachbarten physikalischen Teilbereichs verfügen.

Somit können bei einer jeweiligen Steuervorrichtung eines physikalischen Teilbereiches historische Dienstgüteinformationen über benachbarte der physikalischen Teilbereiche vorliegen.

Somit kann vorteilhafterweise eine Blockchain ausgebildet werden, bei welcher ein jeweiliger Blockchain-Knoten beispielsweise einer jeweiligen der Steuervorrichtungen zugewiesen oder von ihr umfasst ist, und eine Änderung des veröffentlichten virtuellen Netzabbilds, das von den mehreren Steuervorrichtungen gemeinsam benutzt wird, nur möglich ist bei einem Konsens zwischen den Blockchain-Knoten der mehreren Steuervorrichtungen. Der Konsens kann vorteilhafterweise insbesondere darauf beruhen, dass eine die Änderung anfordernde Steuervorrichtung (dem die Änderung anfordernden Blockchain-Knoten zugeordnete Steuervorrichtung) über einen vorbestimmten historischen Zeitraum hinweg konsistent Dienste von hinreichender Güte erbringt. Somit kann ein Proof-of-Stake erbracht werden.

Einer Steuervorrichtung, die dem System neu hinzugefügt wird, kann vorteilhafterweise insbesondere zunächst das Ändern des veröffentlichten Netzabbilds verweigert werden. Wird der von der Steuervorrichtung gesteuerte physikalische Teilbereich über einen vorbestimmten Zeitraum hinweg konsistent mit einer hirneichenden Dienstgüte betrieben, kann sich die Steuervorrichtung Kredibilität erwerben und nach einiger Zeit die Möglichkeit zum Ändern des veröffentlichten Netzabbilds erlangen.

Somit ist es vorteilhaft möglich, einen automatisierten Konsens darüber herbeizuführen, dass einer mit hinreichender Kredibilität betriebenen Steuervorrichtung die Berechtigung zum Ändern des veröffentlichten Netzabbilds eingeräumt wird.

Die jeweilige Einheit einer jeweiligen Steuervorrichtung, zum Beispiel Steuereinheit, Speichereinheit und/oder Abgleicheinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einem weiteren Aspekt wird ein Verfahren zum Betreiben eines softwaredefinierten Netzwerks mit einer Anzahl von Netzelementen vorgeschlagen. Das Verfahren umfasst: Speichern, in einer Speichereinheit einer Steuervorrichtung, eines Netzabbilds des softwaredefinierten Netzwerks; Steuern, durch eine Steuereinheit der Steuervorrichtung, basierend auf dem gespeicherten Netzabbild, eines Weiterleitens von Datenströmen durch die Anzahl von Netzelementen; und Abgleichen des in der Speichereinheit der Steuervorrichtung gespeicherten Netzabbilds mit einem in einem Hauptbuch einer Blockchain veröffentlichten Netzabbild.

Die für die vorgeschlagene Steuervorrichtung und/oder das vorgeschriebene System beschriebenen Ausführungsformen und Merkmale gelten für das vorgeschlagene Verfahren entsprechend.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine Steuervorrichtung, ein softwaredefiniertes Netzwerk und eine Blockchain gemäß einem ersten Ausführungsbeispiel;
Fig. 2 zeigt ein Verfahren zum Betreiben eines softwaredefinierten Netzwerks gemäß dem ersten Ausführungsbeispiel;
Fig. 3 zeigt eine Weiterbildung der Steuervorrichtung aus Fig. 1 und eine physikalische Ansicht des softwaredefinierten Netzwerks;
Fig. 4 zeigt die Weiterbildung der Steuervorrichtung aus Fig. 3 und eine virtuelle Ansicht des softwaredefinierten Netzwerks; und
Fig. 5 zeigt ein System zum Betreiben eines softwaredefinierten Netzwerks mit mehreren physikalischen Teilbereichen gemäß einem zweiten Ausführungsbeispiel.

In den Figuren sind gleiche oder funktionsgleiche Elemente mit denselben Bezugszeichen versehen worden, sofern nichts anderes angegeben ist.

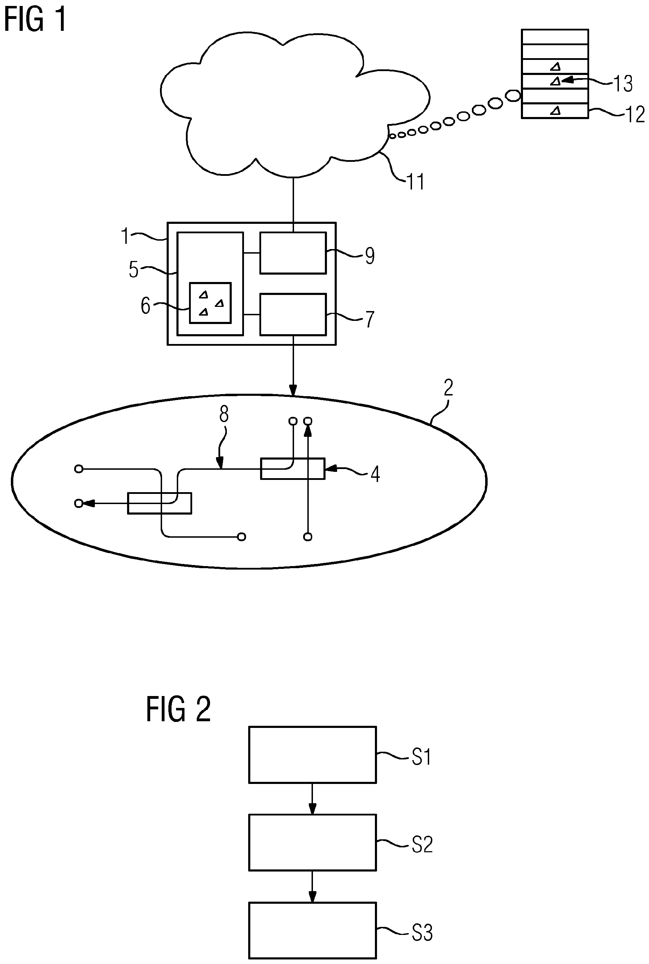

Fig. 1 zeigt eine Steuervorrichtung 1, ein softwaredefiniertes Netzwerk 2 und eine Blockchain 11 gemäß einem ersten Ausführungsbeispiel.

Die Steuervorrichtung 1 umfasst eine Speichereinheit 5, eine Steuereinheit 7 und eine Abgleicheinheit 9. In der Speichereinheit 5 ist ein Netzabbild 6 des softwaredefinierten Netzwerks 2 gespeichert.

Das softwaredefinierte Netzwerk 2 umfasst zwei Netzelemente 4, welche dazu eingerichtet sind, Datenströme 8 innerhalb des softwaredefinierten Netzwerks 2 weiterzuleiten.

In Fig. 1 ist weiterhin eine Blockchain 11 gezeigt, die als Cloud veranschaulicht ist. Es versteht sich, dass die Blockchain 11 durch eine Vielzahl von (nicht gezeigten) Blockchain-Knoten eingerichtet sein kann.

In Fig. 1 ist weiterhin ein Hauptbuch 12 der Blockchain 11 veranschaulicht. In dem Hauptbuch 12 ist ein veröffentlichtes Netzabbild 13 gespeichert. Das veröffentlichte Netzabbild ist als eine Abfolge mehrerer Änderungen oder Änderungstransaktionen 13 veranschaulicht.

Fig. 2 zeigt ein Verfahren zum Betreiben des softwaredefinierten Netzwerks 2. Es wird auf Fig. 1 und Fig. 2 gemeinsam Bezug genommen.

In Schritt S1 wird das Netzabbild 6 des softwaredefinierten Netzwerks 2 in der Speichereinheit 5 gespeichert.

In Schritt S2 wird das Weiterleiten von Datenströmen 8 durch die Netzelemente 4 von der Steuereinheit 7 basierend auf dem Netzabbild 6 gesteuert.

Insbesondere meldet ein Netzelement 4 Verkehrsparameter eines nicht identifizierten Datenpakets (nicht gezeigt) an die Steuereinheit 7. Die Steuereinheit 7 bestimmt anhand des in der Speichereinheit 5 gespeicherten Netzabbilds 6 eine Datenstromregel für jedes der beiden Netzelemente 4 und implementiert die Datenstromregel auf den beiden Netzelementen 4. Dadurch wird ein Datenstrom 8 eingerichtet. Wenn weitere Pakete mit denselben Verkehrsparametern bei dem Netzelement 4 eintreffen, können diese anhand der implementierten Datenstromregel als dem Datenstrom 8 zugehörig identifiziert und gemäß den Datenstromregeln an das weitere Netzelement 4 und/oder einen Endpunkt (durch Kreise angedeutet) weitergeleitet und ggf. parametrisiert werden, ohne dass hierfür eine weitere Kommunikation mit der Steuereinheit 7 erforderlich ist.

In Schritt S3 wird das in der Speichereinheit 5 gespeicherte Netzabbild 6 mit dem in dem Hauptbuch 12 der Blockchain 11 veröffentlichten Netzabbild 13 abgeglichen.

Insbesondere kann zum Abgleichen eine in dem Hauptbuch 12 veröffentliche Änderung des veröffentlichten Netzabbilds 13 in das gespeicherte Netzabbild 6 übernommen werden und/oder eine Änderung an dem gespeicherten Netzabbild 6 kann als Änderung des veröffentlichten Netzabbilds 13 in dem Hauptbuch 12 veröffentlicht werden.

Insbesondere kann die Abgleicheinheit 7 dazu eingerichtet sein, einer Änderung, die an dem Netzabbild 6 vorgenommen werden soll, deren Veröffentlichung aber von der Blockchain 11 basierend auf dem Konsensprotokoll der Blockchain 11 abgelehnt wird, nicht in das gespeicherte Netzabbild 6 zu übernehmen (ihre Übernahme zu verhindern und/oder rückgängig zu machen).

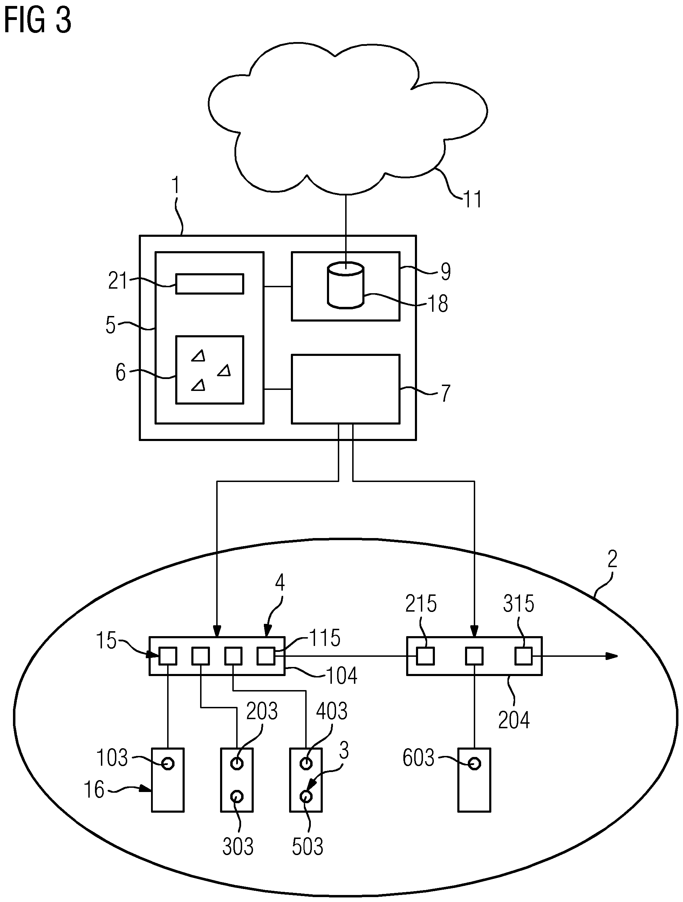

Fig. 3 zeigt eine Weiterbildung der Steuervorrichtung 1 aus Fig. 1 und eine physikalische Ansicht des softwaredefinierten Netzwerks 2.

Das softwaredefinierte Netzwerk 2 ist auf physikalischer Ebene aus zwei Netzelementen 4 gebildet. Ein jeweiliges der Netzelemente 4 weist eine jeweilige Anzahl Anschlüsse 15 auf. Mehrere Endgeräte 16 sind mit je einem der Anschlüsse 15 eines der Netzelemente 4 verbunden. Auf einem jeweiligen der Endgeräte 16 ist jeweils mindestens ein Endpunkte 3 ausgebildet.

Einige der Anschlüsse der Netzelemente 4 sind nicht mit einem Endgerät 16 verbunden. So ist der Anschluss 115 des Netzelements 104 mit dem Anschluss 215 des Netzelements 204 verbunden. Der Anschluss 315 des Netzelements 204 stellt einen Übergabepunkt zu einem externen Netzwerk und/oder zu einem weiteren softwaredefinierten Netzwerk (nicht gezeigt) dar.

In einem analog zu der in Fig. 3 gezeigte Weise eingerichteten herkömmlichen physikalischen Netzwerk wäre es, sofern es sich bei den Netzelementen 4 um herkömmliche Switches handeln würde, möglich, dass ein jeder der Endpunkte 3 mit einem jeden der Endpunkte 3 kommunizieren kann, wobei sich jeweilige der Datenströme beeinträchtigen könnten.

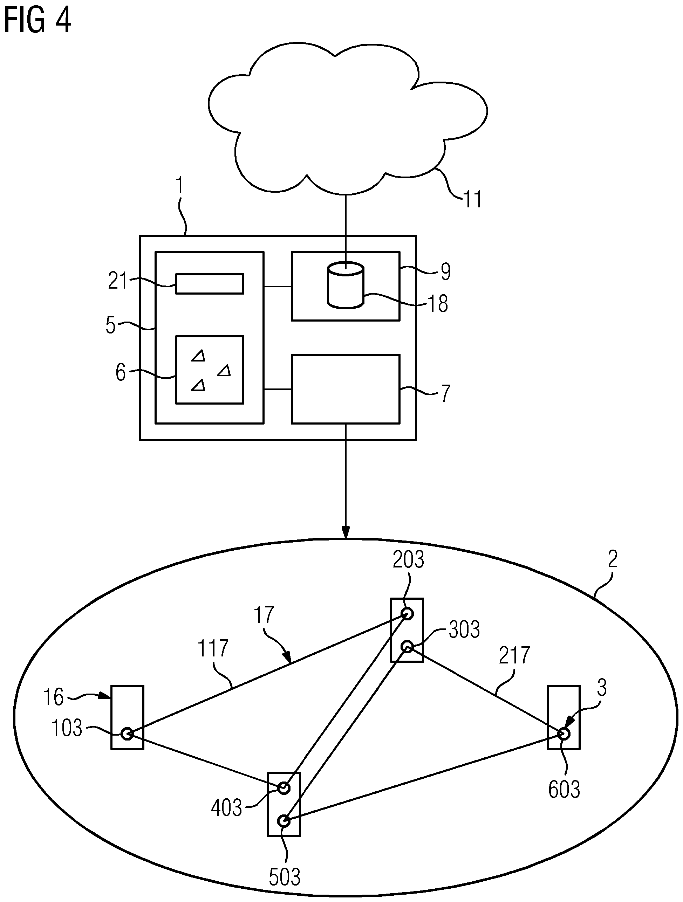

Jedoch implementiert die Steuereinheit 7 der Steuereinrichtung 1 basierend auf dem Netzabbild 6 virtuelle Mandantennetzbereiche (17 in Fig. 4) in dem softwaredefinierten Netzwerk 2, indem sie in einem jeweiligen Netzelement 4 jeweilige Datenstromregelsätze implementiert (dies ist in Fig. 3 durch Pfeile angedeutet). Die Netzelemente 4 sind eingerichtet, Datenströme (8 in Fig. 1) in dem softwaredefinierten Netzwerk 2 basierend auf den in den Netzelementen 4 jeweils implementierten Datenstromregelsätzen weiterzuleiten und zu parametrisieren.

Fig. 4 zeigt die Weiterbildung der Steuervorrichtung 1 aus Fig. 1 und eine virtuelle Ansicht des softwaredefinierten Netzwerks 2.

Wie in Fig. 4 gezeigt, ist ein erster virtueller Mandantennetzbereich 17, 117 aus den Endpunkten 103, 203 und 403 gebildet. Ein zweiter virtueller Mandantennetzbereich 17, 217 ist aus den Endpunkten 303, 503 und 603 gebildet. Die in den Netzelementen 4 (Fig. 3) implementierten Datenstromregeln bewirken, dass sich die virtuellen Mandantennetzbereiche 17, 117, 217 gegenüber ihren jeweiligen Endpunkten 3 wie vollständig separierte physikalische Netzbereiche verhalten. Anders ausgedrückt können die Netzelemente 4 durch eine geeignete Parametrisierung, wie beispielsweise eine Bandbreitenlimitierung, ein Firewalling und dergleichen, verhindern, dass Datenströme (8 in Fig. 1) eines der virtuellen Mandantennetzbereiche 117 Datenströme eines zweiten der virtuellen Mandantennetzbereiche 217 beeinträchtigen.

Es versteht sich somit, dass es sich bei dem in der Speichereinheit 5 der Steuervorrichtung 1 gespeicherten Netzabbild 6, auf dessen Grundlage das Weiterleiten und Parametrisieren der Datenströme (8 in Fig. 1) durch die Netzelemente 4 in dem softwaredefinierten Netzwerk 2 gesteuert wird, um besonders sensible Informationen handelt, die eines Schutzes vor Manipulationen bedürfen.

Die Steuereinrichtung 1 realisiert den Manipulationsschutz des gespeicherten Netzabbilds 6 vorteilhafterweise dadurch, dass sie das gespeicherte Netzabbild 6, wie zuvor beschrieben, mit einem in einem Hauptbuch 12 (Fig. 1) der Blockchain 11 veröffentlichten Netzabbild 13 (Fig. 1) abgleicht.

Die in Fig. 3 und 4 gezeigte Weiterbildung der Steuereinrichtung 1 unterscheidet sich ferner wie folgt von der in Fig. 1 gezeigten Steuereinrichtung 1:
Die Steuereinheit 7 erhält von den jeweiligen Netzelementen 4 Dienstgüteinformationen. Beispielsweise erhält die Steuereinheit 7 von dem Netzelement 204 Dienstgüteinformationen über eine Dienstgüte eines weiteren softwaredefinierten Netzwerks (nicht gezeigt), zu welchem der Anschluss 315 einen Übergabepunkt ausbildet. Die Steuereinheit 7 speichert die erhaltenen Dienstgüteinformationen als gespeicherte Dienstgüteinformationen 21 in der Speichereinheit 5.

Die Abgleicheinheit 9 umfasst einen Blockchain-Knoten 18 der Blockchain 11. Gemeinsam mit weiteren Blockchain-Knoten (nicht gezeigt) bildet der Blockchain-Knoten 18 die Blockchain 11 aus. Insbesondere nimmt der Blockchain-Knoten 18 an der Konsensfindung gemäß einem Konsensprotokoll der Blockchain 11 teil. Fordert ein weiterer Blockchain-Knoten (nicht gezeigt) einer weiteren Steuervorrichtung (nicht gezeigt) eine Änderung der veröffentlichten Netzabbilds (13 in Fig. 1) an, so stimmt der Blockchain-Knoten 18 dem Konsens zur Veröffentlichung der Änderung nur zu, falls aus den Dienstgüteinformationen 21 hervorgeht, dass die weitere Steuervorrichtung das weitere softwaredefinierte Netzwerk mit einer Dienstgüte betreibt, die höher als ein vorbestimmter Schwellwert ist.

Somit können vorteilhaft nur Steuervorrichtungen 1, die ein jeweiliges softwaredefiniertes Netzwerk 2 mit hinreichender Dienstgüte betreiben, erfolgreich Änderungen des veröffentlichten Netzabbilds (13 in Fig. 1) anfordern.

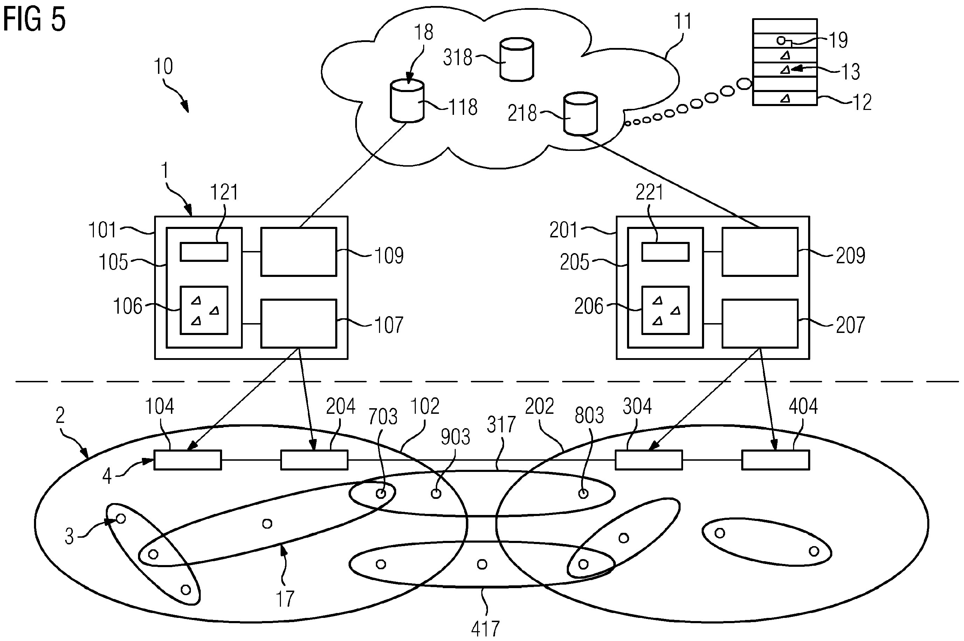

Fig. 5 zeigt ein System 10 zum Betreiben eines softwaredefinierten Netzwerks 2 mit mehreren physikalischen Teilbereichen 102, 202 gemäß einem zweiten Ausführungsbeispiel.

Das System 10 umfasst eine erste Steuervorrichtung 101 und eine zweite Steuervorrichtung 102 sowie mehrere Blockchain-Knoten 18, 118, 218, 318 einer Blockchain 11.

Das softwaredefinierte Netzwerk 2 umfasst einen ersten physikalischen Teilbereich 102 und einen zweiten physikalischen Teilbereich 202. Für einen jeweiligen physikalischen Teilbereich 102, 202 ist eine gemischte virtuelle/physikalische Ansicht veranschaulicht.

Auf physikalischer Ebene ist der erste physikalische Teilbereich 102 durch zwei SDN-Switches (Netzelemente) 104, 204 sowie mehrere (nicht gezeigte) Netzwerkendgeräte ausgebildet. Der physikalische Teilbereich 202 ist durch zwei SDN-Switches 304, 404 und mehrere (nicht gezeigte) Netzwerkendgeräte ausgebildet. Die jeweiligen SDN-Switches 104, 204; 304, 404 eines jeweiligen der physikalischen Teilbereiche 102, 202 sind untereinander verbunden. Außerdem ist der SDN-Switch 204 mit dem SDN-Switch 304 verbunden. Die SDN-Switche 204, 304 bilden somit einen jeweiligen Übergabepunkt zwischen den physikalischen Teilbereichen 102, 202 aus.

Auf virtueller Ebene ist in den physikalischen Teilbereichen 102, 202 eine Vielzahl von Endpunkten 3 ausgebildet. Bei den Endpunkten 3 kann es sich um Dienste, Ports usw. der (nicht gezeigten) Netzwerkendgeräte handeln. Ferner ist in den physikalischen Teilbereichen 102, 202 eine Vielzahl von virtuellen Netzwerkbereichen oder Mandantennetzbereichen 17 ausgebildet. Einige der Mandantennetzbereiche 317, 417 erstrecken sich über beide physikalischen Teilbereiche 102, 202; andere nur über einen einzelnen der Teilbereiche 102, 202.

Eine jeweilige der Steuervorrichtungen 1 des Systems 10 ist ein jeweiliger SDN-Controller 101, 201.

Der erste SDN-Controller 101 umfasst eine Speichereinheit 105, eine Steuereinheit 107 und eine Abgleicheinheit 109. In der Speichereinheit 105 ist ein Netzabbild 106 des von den physikalischen Teilbereichen 102, 202 gebildeten softwaredefinierten Netzwerks 2 gespeichert.

Basierend auf dem Netzabbild 106 implementiert die Steuereinheit 107 jeweilige Datenstromregeln in einem jeweiligen der SDN-Switches 104, 204 und steuert dadurch das Weiterleiten von Datenströmen (8 in Fig. 1) durch die SDN-Switches 104, 204. Die Datenstromregeln sind dazu eingerichtet, bei ihrer Implementierung auf den Netzelementen 104, 204 die Ausbildung der virtuellen Mandantennetzbereiche 17 (Abschnitte der virtuellen Mandantennetzbereiche 17 innerhalb des ersten physikalischen Teilbereichs 102) zu bewirken.

Weiterhin empfängt die Steuereinheit 107 fortlaufend Dienstgüteinformationen von den SDN-Switches 104, 204. Im Speziellen empfängt die Steuereinheit 107 des ersten SDN-Controllers 101 von dem SDN-Switch 204, der einen Übergabepunkt zu dem zweiten physikalischen Teilbereich 202 ausbildet, Dienstgüteinformationen, die eine Dienstgüte des zweiten physikalischen Teilbereichs 202 beschreiben und somit als Maß für die Kredibilität des zweiten SDN-Controllers 201 angesehen werden können. Die Steuereinheit 107 speichert einen zeitlichen Verlauf 121 der empfangenen Dienstgüteinformationen in der Speichereinheit 105.

Der Abgleicheinheit 109 gleicht das in der Speichereinheit 105 gespeicherte Netzabbild 106 mit dem in dem Hauptbuch 12 der Blockchain 11 veröffentlichten Netzabbild 13 ab. Hierzu kommuniziert die Abgleicheinheit 109 mit einem Blockchain-Knoten 118, welcher der Abgleicheinheit 109 zugeordnet ist.

In dem Hauptbuch 12 der Blockchain 11 sind ferner Berechtigungsinformationen 19 veröffentlicht, bei denen es sich beispielsweise um öffentliche Schlüssel der Blockchain-Knoten 118, 218 und 318 handelt.

Der zweite SDN-Controller 201 umfasst eine Speichereinheit 205, in der ein zeitlicher Verlauf 221 von Dienstgüteinformationen und ein Netzabbild 206 gespeichert sind, sowie eine Steuereinheit 207 und eine Abgleicheinheit 209. Die jeweiligen Einheiten 205, 207, 209 des zweiten SDN-Controllers 201 sind auf gleichartige Weise wie die entsprechenden Einheiten 105, 107, 109 des ersten SDN-Controllers 101 ausgestaltet.

Neben dem bereits anhand des ersten Ausführungsbeispiels beschriebenen Vorteil eines Manipulationsschutzes des gespeicherten Abbilds 106 kann das Abgleichen durch die Abgleicheinheiten 101, 201 den weiteren Vorteil bieten, dass sich mittels des blockchainbasierten Abgleichs die SDN-Controller 101 und 201 auf ein gemeinsames Netzabbild 106, 206, 13 verständigen können. Auf diese Weise können die SDN-Controller 101, 102 gemeinsam die Netzwerkelemente 4 eines jeweiligen physikalischen Teilbereichs 102, 202 derart steuern, dass Mandantennetzbereiche 317, 417 ausgebildet werden, welche mehr als einen der physikalischen Teilbereiche 102, 202 überspannen.

Die Blockchain 11 ist vorliegend aus drei Blockchain-Knoten 118, 218, 318 ausgebildet. Der erste Blockchain-Knoten 118 ist der Abgleicheinheit 109 des ersten SDN-Controllers 101 zugeordnet. Der erste Blockchain-Knoten 118 bildet einen Endpunkt 703 in einem Abschnitt des Mandantennetzbereichs 317 aus, der sich in dem ersten physikalischen Teilbereich 102 befindet. Man kann somit sagen, dass der erste Blockchain-Knoten 118 dem ersten physikalischen Teilbereich 102 zugeordnet ist. Der zweite Blockchain-Knoten 218 ist der Abgleicheinheit 209 des zweiten SDN-Controllers 201 zugeordnet. Der zweite Blockchain-Knoten 218 bildet einen Endpunkt 803 in einem Abschnitt des Mandantennetzbereichs 317 aus, der sich in dem zweiten physikalischen Teilbereich 202 befindet. Damit ist der zweite Blockchain-Knoten 218 dem zweiten physikalischen Teilbereich 202 zugeordnet. Der dritte Blockchain-Knoten 318 ist keinem der SDN-Controller 101, 201 zugeordnet. Er bildet ebenfalls einen Endpunkt 903 in dem Mandantennetzbereich 317 aus. Man kann somit sagen, dass der dritte Blockchain-Knoten 318 dem virtuellen Mandantennetzbereich 317 zugeordnet ist.

Die Blockchain-Knoten 118, 218, 318 kommunizieren untereinander mittels Datenströmen (8 in Fig. 1) zwischen den von ihnen ausgebildeten Endpunkten 703, 803, 903 innerhalb des Mandantennetzbereichs 317 auf der Datenebene des softwaredefinierten Netzwerks 2 und somit in einem öffentlichen Bereich. Die Abgleicheinheit 109 des ersten SDN-Controllers 101, welcher in einem privaten Bereich angeordnet ist, kommuniziert mit dem ersten Blockchain-Knoten 118 auf einer Steuerebene des softwaredefinierten Netzwerks 2. Ebenso kommuniziert die Abgleicheinheit 209 auf der Steuerebene mit dem zweiten Blockchain-Knoten 218.

Bei dem Mandantennetzbereich 317 kann es sich somit um einen Mandantennetzbereich in der Datenebene des softwaredefinierten Netzwerks 2 handeln, der für den Betrieb der Blockchain 11 reserviert ist. Mit anderem Worten sind die Betreiber der Blockchain 11 Mandanten des Mandantennetzbereichs 317.

Es versteht sich, dass die Blockchain 11 weitere Blockchain-Knoten (nicht gezeigt) umfassen kann. Durch Hinzufügen weiterer Blockchain-Knoten können die Redundanz und der Manipulationsschutz der Blockchain 11 weiter erhöht werden.

Soll das veröffentlichte Netzabbild 13 (und somit auch die gespeicherten Netzabbilder 106 und 206) geändert werden, übermittelt einer der Blockchain-Knoten 18 eine Änderungsanforderung als unbestätigte Transaktion an die Blockchain 11.

Vorzugsweise stimmt gemäß dem Konsensprotokoll der Blockchain 11 ein jeweiliger der Blockchain-Knoten 118, 218, 318 der Veröffentlichung der übermittelten Änderungsanforderung als Änderung des veröffentlichten Netzabbilds 13 in dem Hauptbuch 12 der Blockchain 11 nur zu (übernimmt einen Block, der die Änderungsanforderung als unbestätigte Transaktion umfasst, nur dann als bestätigten Block mit einer bestätigten Transaktion in seine lokale Kopie des Hauptbuchs 12), wenn die Änderungsanforderung mit einer digitalen Signatur versehen ist, deren Gültigkeit anhand eines der von den Berechtigungsinformationen 19 umfassten öffentlichen Schlüssel verifizierbar ist.

Auf diese Weise kann vorteilhafterweise verhindert werden, dass Änderungsanforderungen veröffentlicht werden, die von einem weiteren Blockchain-Knoten (nicht gezeigt) an die Blockchain 11 übermittelt werden. Bei dem weiteren Blockchain-Knoten könnte es sich um einen Blockchain-Knoten handeln, der von einem Angreifer betrieben wird, der sich widerrechtlichen Zugang zu dem Mandantennetzbereich 317 verschafft hat.

Vorzugsweise kann eine weitere Bedingung zur Konsensfindung an eine Dienstgüte geknüpft sein. Beispielsweise prüft der Blockchain-Knoten 118, wenn eine an die Blockchain 11 übermittelte Änderungstransaktion beispielsweise von dem Blockchain-Knoten 218 signiert ist, ob aus dem gespeicherten zeitlichen Verlauf 121 der von der Steuereinheit 107 erhaltenen Dienstgüteinformationen hervorgeht, dass der zweite physikalische Teilbereich 202, welchem der Blockchain-Knoten 218 zugeordnet ist, für einen vorbestimmten Zeitraum mit einer mittleren Dienstgüte betrieben wurde, die höher als ein vorbestimmter Schwellwert ist. Liegt die mittlere Dienstgüte des Betriebs des zweiten physikalischen Teilbereichs 202 während des vorbestimmten Zeitraums über dem vorbestimmten Schwellwert, stimmt der erste Blockchain-Knoten 118 dem Konsens zu. Andernfalls stimmt er dem Konsens nicht zu.

Somit kann man sagen, dass die Blockchain 11 ein Proof-of-Stake-basiertes Konsensprotokoll implementiert. Beispielsweise umfasst hierbei ein Proof-of-Stake oder Nachweis des berechtigten Interesses des die Änderung anfordernden Blockchain-Knotens 218 die den Blockchain-Knoten 218 identifizierende Signatur der Änderungsanforderung sowie die in dem zeitlichen Verlauf 121 umfassten Dienstgüteinformationen über die Dienstgüte des dem zweiten Blockchain-Knoten 218 zugeordneten zweiten physikalischen Teilbereichs 202.

Das System 10 (SDN-Controller 101, 201 und Blockchain-Knoten 18) ermöglicht somit vorteilhafterweise die Ausbildung eines softwaredefinierten Weitbereichsnetzwerks 2 mit mehreren SDN-Controllern 101, 102, welche die in ihnen gespeicherten Netzabbilder 106, 206 auf sichere Weise mittels der von den Blockchain-Knoten 18 gebildeten Blockchain 11 abgleichen.

Hierbei ist vorteilhafterweise ein unbegrenztes Vertrauensverhältnis zwischen Betreibern der SDN-Controller 101, 201 entbehrlich. Vielmehr kann ein jeweiliger SDN-Controller 101, 201 durch fortgesetzten Betrieb mit einer hinreichenden Dienstgüte im Laufe der Zeit Kredibilität erwerben und somit die Berechtigung zum Anfordern von Änderungen des für den Abgleich verwendeten veröffentlichten Netzabbilds 13 erwerben.

Obwohl die vorliegende Erfindung anhand von Ausführungsbeispielen beschrieben wurde, ist sie vielfältig modifizierbar.

Im zweiten Ausführungsbeispiel wurde ein softwaredefiniertes Netzwerk 2 beschrieben, das zwei physikalische Teilbereiche 102, 202 mit einer jeweiligen Steuervorrichtung 101, 201 umfasst. Es sei angemerkt, dass eine Sichtweise, bei der die physikalischen Teilbereiche 102, 202 als softwaredefinierte Netzwerke 102, 202 sind und das softwaredefinierte Netzwerk 2 als Netzwerkverbund bezeichnet werden, funktional äquivalent ist.

Anstelle der im zweiten Ausführungsbeispiel beschriebenen SDN-Controller 101, 201 kann das System 10 des zweiten Ausführungsbeispiels auch mit einer Steuervorrichtung 1 gemäß dem ersten Ausführungsbeispiel oder der Weiterbildungen davon betrieben werden.

Das Konsensprotokoll kann weitere Bedingungen zur Erhöhung des Manipulationsschutzes umfassen.

Beispielsweise kann das Konsensprotokoll vorgeben, dass die Änderungsanforderung bei Anwendung auf das veröffentlichte Netzabbild ein geändertes veröffentlichtes Netzabbild ergibt, das in sich schlüssig ist, beispielsweise keine Schleifen, offenen Enden, widersprüchlichen Definitionen oder dergleichen enthält.

Beispielsweise kann die Blockchain 11 ein Kryptowährungssystem implementieren, und das Konsensprotokoll vorschreiben, dass für eine Änderung des veröffentlichten Netzabbilds eine vordefinierte Menge an Kryptowährung aufzuwenden ist.

Gemäß dem zweiten Ausführungsbeispiel bildet ein jeweiliger der Blockchain-Knoten 18 je einen Endpunkt in dem Mandantenbereich 317 aus, und die Blockchain-Knoten 18 kommunizieren mittels Datenströmen des Mandantenbereichs 317 miteinander. Diese beispielhafte Ausgestaltung kann auch als In-Band-Blockchain oder Blockchain mit In-Band-Kommunikation bezeichnet werden.

Denkbar ist auch eine Out-of-Band-Blockchain oder eine Mischform, bei der einige der Blockchain-Knoten 18 in-band und einige der Blockchain-Knoten 18 out-of-band miteinander kommunizieren.

Unter Out-of-Band-Kommunikation ist hierbei insbesondere Kommunikation über ein öffentliches Netzwerk und/oder Kommunikation über ein Netzwerk zu verstehen, das von dem softwaredefinierten Netzwerk 2 verschieden ist.

Auch bei einer Out-of-Band-Blockchain kann ein jeweiliger Blockchain-Knoten 18 einem virtuellen Mandantennetzbereich 17 und/oder einem physikalischen Teilbereich 102, 202 des softwaredefinierten Netzwerks 2 zugeordnet sein. Die Zuordnung kann dadurch realisiert sein, dass der Blockchain-Knoten 18 durch einen Mandanten und/oder einen Betreiber eines physikalischen Teilbereiches bzw. einer Steuervorrichtung verwaltet wird. Die Zuordnung kann dadurch dokumentiert sein, dass ein jeweiliger der zugeordneten Blockchain-Knoten 18 über einen entsprechenden digitalen Schlüssel verfügt, der zum Signieren von Transaktionen, Änderungsanforderungen und dergleichen verwendbar ist.

Die vorgeschlagene Steuervorrichtung 1, 101, 201 und das vorgeschlagene System 10 sind vorteilhaft im Rahmen von Industrie 4.0 anwendbar, wo es vorteilhaft sein kann, in einer industriellen Anlage, die über mehrere Standorte verteilt sein kann, ein softwaredefiniertes Weitbereichsnetzwerk 2 mit einer Vielzahl von Netzwerkbetreibern und Mandanten einzurichten.

## Patentansprüche

1. Steuervorrichtung (1) zum Betreiben eines softwaredefinierten Netzwerks (2) mit einer Anzahl von Netzelementen (4), wobei die Steuervorrichtung (1) aufweist:
eine Speichereinheit (5), die dazu eingerichtet ist, ein Netzabbild (6) des softwaredefinierten Netzwerks (2) zu speichern,
eine Steuereinheit (7), die dazu eingerichtet ist, basierend auf dem gespeicherten Netzabbild (6) ein Weiterleiten von Datenströmen (8) durch die Anzahl von Netzelementen (4) zu steuern, und
eine Abgleicheinheit (9), die dazu eingerichtet ist, das gespeicherte Netzabbild (6) mit einem in einem Hauptbuch (12) einer Blockchain (11) veröffentlichten Netzabbild (13) abzugleichen.

2. Steuervorrichtung nach Anspruch 1,
**dadurch gekennzeichnet,**
**dass** die Abgleicheinheit (9) dazu eingerichtet ist,
- eine Änderung des gespeicherten Netzabbilds (6) als Änderungsanforderung des veröffentlichten Netzabbilds (13) an die Blockchain (11) zu übermitteln,
- die Änderung des gespeicherten Netzabbilds (6) zu übernehmen, wenn die Änderungsanforderung des veröffentlichten Netzabbilds (13) als Änderung des veröffentlichen Netzabbilds in dem Hauptbuch (12) der Blockchain (11) veröffentlicht wird, und
- die Änderung des gespeicherten Netzabbilds (6) zu verwerfen, wenn die Änderungsanforderung des veröffentlichten Netzabbilds (6) nicht als Änderung des veröffentlichen Netzabbilds (13) in dem Hauptbuch (12) der Blockchain (11) veröffentlicht wird.

3. Steuervorrichtung nach Anspruch 1 oder 2,
**dadurch gekennzeichnet,**
**dass** die Abgleicheinheit (9) dazu eingerichtet ist, wenn eine Änderungsanforderung des veröffentlichten Netzabbilds (13) als Änderung des veröffentlichen Netzabbilds (13) in dem Hauptbuch (12) der Blockchain (11) veröffentlicht wird, die Änderung des veröffentlichten Netzabbilds (13) als Änderung des gespeicherten Netzabbilds (6) zu übernehmen.

4. Steuervorrichtung nach einem der Ansprüche 1 bis 3,
**dadurch gekennzeichnet,**
**dass** die Abgleicheinheit (9) einen Blockchain-Knoten (18) der Blockchain (11) umfasst,
wobei der Blockchain-Knoten (18) dazu eingerichtet ist, einem Konsens zur Veröffentlichung einer an die Blockchain (11) übermittelten Änderungsanforderung des veröffentlichen Netzabbilds (13) in dem Hauptbuch (12) der Blockchain (11) zuzustimmen, wenn die Änderungsanforderung des veröffentlichten Netzabbilds (13) einem Konsensprotokoll der Blockchain (11) entspricht.

5. Steuervorrichtung nach Anspruch 4,
**dadurch gekennzeichnet,**
**dass** die Steuereinheit (7) dazu eingerichtet ist, von mindestens einem der Anzahl von Netzelementen (4) Dienstgüteinformationen (21) zu empfangen,
wobei das Konsensprotokoll der Blockchain (11) auf den Dienstgüteinformationen (21) basiert.

6. Steuervorrichtung nach einem der Ansprüche 1 bis 5,
**dadurch gekennzeichnet,**
**dass** mindestens die Steuereinheit (7) in einem privaten Bereich angeordnet ist und mindestens der Blockchain-Knoten (18) in einem öffentlichen Bereich angeordnet ist.

7. System (10) zum Betreiben eines softwaredefinierten Netzwerks (2) mit einer Anzahl von Netzelementen (4), wobei das System (10) aufweist:
eine Anzahl von Steuervorrichtungen (1, 101, 201) nach einem der Ansprüche 1 bis 6, und
mehrere Blockchain-Knoten (18), die gemeinsam die Blockchain (11) ausbilden und dazu eingerichtet sind:
- eine an die Blockchain (11) übermittelte Änderungsanforderung des veröffentlichen Netzabbilds (13) untereinander auszutauschen; und
- die Änderungsanforderung nur dann als Änderung des veröffentlichten Netzabbilds (13) in dem Hauptbuch (12) der Blockchain (11) zu veröffentlichen, wenn ein Konsens gemäß einem Konsensprotokoll der Blockchain (11) zwischen den mehreren Blockchain-Knoten (18) erreicht wird.

8. System nach Anspruch 7,
**dadurch gekennzeichnet,**
**dass** die Steuereinheiten (7, 107, 207) der Anzahl von Steuervorrichtungen (1, 101, 201) dazu eingerichtet sind, das Weiterleiten von Datenströmen (8) durch die Anzahl von Netzelementen (4) zu steuern, indem sie auf einer Steuerebene des softwaredefinierten Netzwerks (2) mit der Anzahl von Netzelementen (4) kommunizieren; und
die mehreren Blockchain-Knoten (18), die gemeinsam die Blockchain (11) ausbilden, dazu eingerichtet sind, auf einer Datenebene des softwaredefinierten Netzwerks (2) und/oder über ein öffentliches Netzwerk miteinander zu kommunizieren.

9. System nach Anspruch 7 oder 8,
**dadurch gekennzeichnet,**
**dass** die mehreren Blockchain-Knoten (18) dazu eingerichtet sind, den Konsens zum Veröffentlichen der Änderung in dem Hauptbuch (12) der Blockchain (11) abhängig von einem Nachweis eines berechtigten Interesses eines die Änderung anfordernden Blockchain-Knotens (18) zu erreichen.

10. System nach Anspruch 9,
**dadurch gekennzeichnet,**
**dass** in dem Hauptbuch (12) der Blockchain (11) Berechtigungsinformationen (19) veröffentlicht sind, die diejenigen der Blockchain-Knoten (18) angeben, die zum Anfordern von Änderungen des veröffentlichen Netzabbilds (13) berechtigt sind, und der Nachweis des berechtigten Interesses einen Nachweis umfasst, dass der die Änderung anfordernde Blockchain-Knoten (18) gemäß den in dem Hauptbuch (12) der Blockchain (11) veröffentlichten Berechtigungsinformationen (19) zum Anfordern von Änderungen des veröffentlichten Netzabbilds (13) berechtigt ist.

11. System nach Anspruch 9 oder 10,
**dadurch gekennzeichnet,**
**dass** mehrere virtuelle Mandantennetzbereiche (17) in dem softwaredefinierten Netzwerk (2) eingerichtet sind, welche durch das veröffentlichte Netzabbild (13) definiert sind,
wobei ein jeweiliger einer Anzahl der mehreren Blockchain-Knoten (18, 318) jeweils einem der virtuellen Mandantennetzbereiche (17, 317) zugeordnet ist.

12. System nach einem der Ansprüche 9 bis 11,
**dadurch gekennzeichnet,**
**dass** eine jeweilige der Steuervorrichtungen (1, 101, 201) dazu eingerichtet ist, einen physikalischen Teilbereich (102, 202) des softwaredefinierten Netzwerks (2) zu steuern, wobei ein jeweiliger physikalischer Teilbereich (102, 202) durch eine disjunkte Auswahl aus der Anzahl von Netzelementen (4) gebildet ist,
wobei ein jeweiliger einer Anzahl der mehreren Blockchain-Knoten (18, 118, 218) jeweils einem der physikalische Teilbereiche (102, 202) zugeordnet ist.

13. System nach Anspruch 11 oder 12,
**dadurch gekennzeichnet,**
**dass** der Nachweis eines berechtigten Interesses umfasst:
einen Nachweis, dass der anfordernde Blockchain-Knoten (18, 118, 218, 318) einem der virtuellen Mandantennetzbereiche (17, 317) und/oder einem der physikalischen Teilbereiche (102, 202) zugeordnet ist, und
einen Nachweis einer Dienstgüte des virtuellen Mandantennetzbereichs (17, 317) und/oder des physikalischen Teilbereichs (102, 202), dem der anfordernde Blockchain-Knoten (18, 118, 218, 318) zugeordnet ist.

14. System nach Anspruch 13,
**dadurch gekennzeichnet,**
**dass** die Steuereinheit (7, 107, 207) einer jeweiligen der mehreren Steuervorrichtungen (1, 101, 201) dazu eingerichtet ist, von mindestens einem der disjunkten Auswahl von Netzelementen (4) des von der Steuervorrichtung (1, 101, 201) gesteuerten physikalischen Teilbereiches (102, 202) Dienstgüteinformationen bezüglich der Dienstgüte einer Anzahl weiterer der physikalischen Teilbereiche (101, 202) zu empfangen;
die Speichereinheit (5, 105, 205) einer jeweiligen der mehreren Steuervorrichtungen (1, 101, 201) dazu eingerichtet ist, für jeden der Anzahl weiterer physikalischer Teilbereiche (102, 202) einen zeitlichen Verlauf der von der Steuereinheit (5, 105, 205) empfangenen Dienstgüteinformationen (21, 121, 221) zu speichern; und
der Nachweis der Dienstgüte des physikalischen Teilbereichs (102, 202), dem der anfordernde Blockchain-Knoten (18, 118, 218) zugeordnet ist, auf dem in der Speichereinheit (5, 105, 205) einer jeweiligen der mehreren Steuervorrichtungen (1, 101, 201) gespeicherten zeitlichen Verlauf der Dienstgüteinformationen (21, 121, 221) bezüglich des physikalischen Teilbereichs (102, 202) basiert.

15. Verfahren zum Betreiben eines softwaredefinierten Netzwerks (2) mit einer Anzahl von Netzelementen (4), wobei das Verfahren umfasst:
Speichern (S1), in einer Speichereinheit (5) einer Steuervorrichtung (1), eines Netzabbilds (6) des softwaredefinierten Netzwerks (2),
Steuern (S2), durch eine Steuereinheit (7) der Steuervorrichtung (1), basierend auf dem gespeicherten Netzabbild (6), eines Weiterleitens von Datenströmen (8) durch die Anzahl von Netzelementen (4), und
Abgleichen (S3) des in der Speichereinheit (5) der Steuervorrichtung (1) gespeicherten Netzabbilds (6) mit einem in einem Hauptbuch (12) einer Blockchain (11) veröffentlichten Netzabbild (13).

16. Computerprogrammprodukt, welches auf einer programmgesteuerten Einrichtung die Durchführung des Verfahrens nach Anspruch 15 veranlasst.
